# EUROPEAN PATENT SPECIFICATION

(11) **EP 2 605 690 B1**
(45) Date of publication and mention of the grant of the patent: **05.11.2014**
(21) Application number: 11746136.8
(22) Date of filing: 15.08.2011
(51) Int. Cl.: A47J 43/28, A47J 37/07

(54) **GRILL WITH GRILL TOOL HOLDER**
GRILL MIT GRILLWERKZEUGHALTER
GRIL AVEC PORTE-OUTIL

(30) Priority: 16.08.2010 US 373994 P
(43) Date of publication of application: 26.06.2013
(73) Proprietor: Carrier Commercial Refrigeration, Inc., Charlotte, NC 28269 (US)
(72) Inventor: HILL, David, A., Rockton, IL 61072 (US); SANDS, Jeffrey, L., Freeport, IL 61032 (US)
(74) Representative: Leckey, David Herbert
(86) International application number: PCT/US2011/047753
(87) International publication number: WO 2012/024219

(56) References cited:
- US-A- 4 598 634
- US-A- 5 012 934

## Description

### BACKGROUND

The disclosure relates to food grills. More particularly, the disclosure relates to the holding of tools used in association with food service grills.

A variety of food service grills exist. Exemplary grills include one or more grilling surfaces. For collecting fat and food debris from the food (collectively grease) exemplary grills include channels along at least portions of the perimeter of the grilling surfaces. An exemplary channel is along a side of the grilling surface. Exemplary channels may have drains for draining the grease into a removable collection tray.

Many tools are used in association with a grill. Exemplary tools include utensils such as spatulas, tongs, forks, knives, chopping tools, and the like used on food. Additional tools may be used to clean the grill (e.g., scrapers and the like). A variety of tool holders have been proposed for holding the tools above the grill. US4598634A, over which independent claim 1 is characterised, discloses a grill comprising a grill tool holder. US5012934A discloses an example of a grill tool holder.

### SUMMARY

One aspect of the disclosure involves a grill as defined in claim 1, having at least one grilling surface. A grease collection channel is along at least one side of the grilling surface and has a sidewall with an upper edge. A tool holder is mounted to the sidewall and has at least one tool-holding compartment having an outboard wall extending above and outboard of the sidewall upper edge. The tool holder has at least one drainage port positioned to drain the at least one tool-holding compartment into the grease collection channel.

In various implementations, at least one tool may be carried by the tool holder with a portion of the tool in the tool-holding compartment. A removable grease collection tray may be positioned below the grease collection channel or the removable grease collection tray may define/provide the grease collection channel. The tool holder may straddle the upper edge of the sidewall. The tool holder may comprise a sheetmetal assembly. The sheetmetal assembly may comprise or consist essentially of a first sheetmetal piece, a second sheetmetal piece secured to the first sheetmetal piece, and a third sheetmetal piece secured to the first sheetmetal piece. The first sheetmetal piece may form an outboard wall of the at least one tool-holding compartment and extend from below inboard of the sidewall upper edge to above an outboard of the sidewall upper edge. The second sheetmetal piece may form an inboard wall of the tool-holding compartment. The at least one drainage port may be formed between the first sheetmetal piece and the second sheetmetal piece. The second sheetmetal piece may comprise a plurality of legs or fingers extending along the surface of the first sheetmetal piece inboard of the sidewall. The third sheetmetal piece may extend downward outboard of the sidewall to define a wall-receiving channel between the first sheetmetal piece and the third sheetmetal piece.

In a method for using the grill as defined in claim 10, food may be grilled on the at least one grilling surface. A tool may be used in association with the at least one grilling surface. The tool may be placed in the at least one tool-holding compartment so that grease from the tool drains through the at least one drainage port into the grease collection channel.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 shows an exemplary simplified prior art/baseline grill modified with a tool holder.
FIG. 2 is an end view of the tool holder assembled to a grease can and partially showing mating features of the grill body.
FIG. 3 is a first view of the tool holder.
FIG. 4 is a second view of the tool holder.
FIG. 5 is a front view of the tool holder.
FIG. 6 is a first view of a second tool holder.
FIG. 7 is a second view of the second tool holder.

Like reference numbers and designations in the various drawings indicate like elements.

### DETAILED DESCRIPTION

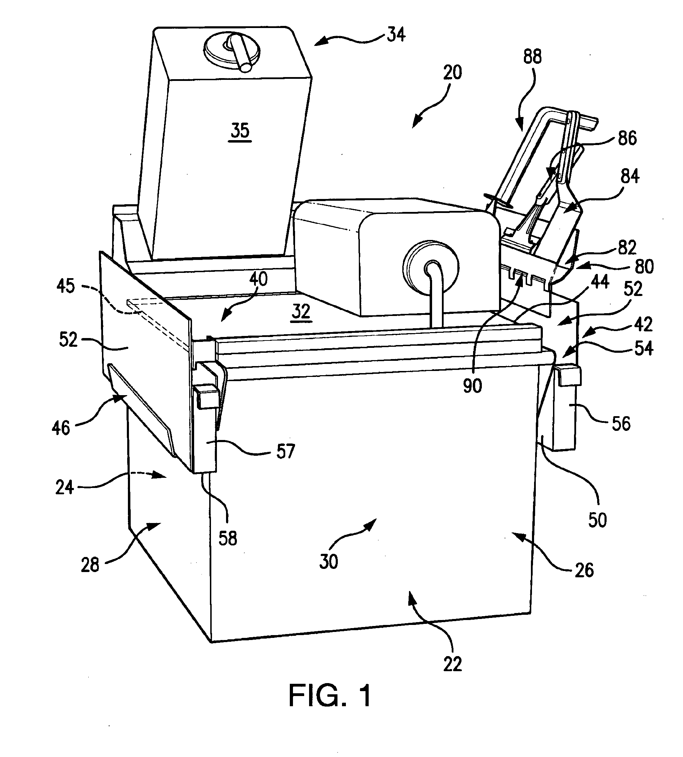

FIG. 1 shows a exemplary grill 20 having a front 22, a back 24, a left side 26 (from the point of view of the grill rather than a user facing the grill), and a right side 28. The exemplary grill comprises a main body 30 having one or more cooking (grilling) surfaces 32 forming a top/(upper end) thereof. In addition to the one or more cooking surfaces 32, the exemplary grill has one or more hinged platens 34 each having a cooking surface 35 along its underside. Each platen 34 may be shifted between a lowered condition and a raised/retracted condition. FIG. 1 shows a left platen in a relatively lowered cooking condition while the right platen is in a relatively raised/retracted condition. When lowered, the surface 35 comes into close proximity with the surface 32 to cook food from above in addition to cooking by the surface 32 from below.

The exemplary cooking surface 32 is formed as the upper surface of a plate/platen 40. The exemplary grill includes at least one removable grease receptacle (grease can) 42. The grease can is configured to mate with the platen 40 along the adjacent outboard side/edge thereof. This allows grease and/or debris to drain or be swept directly from the cooking surface into the grease can. In the example of FIG. 1, there are identical grease cans 42 at the respective left and right edges 44, 45 of the platen 40. Each exemplary grease can is held in a grease can slide 46 which may be formed as an upwardly open channel secured along the associated side 26, 28 of the grill main body.

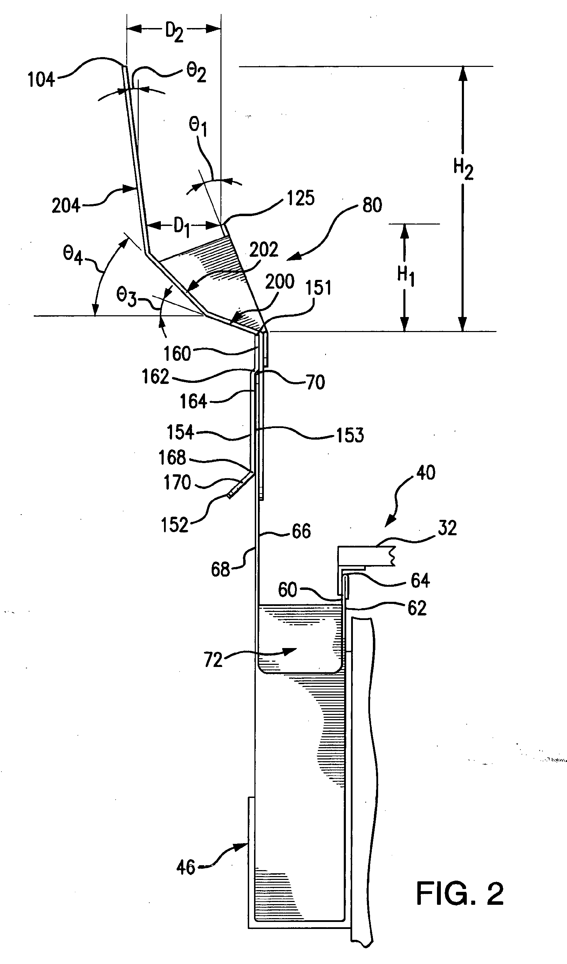

Each exemplary grease can 42 acts as a grease collection channel and has an inboard sidewall 50 surface and an outboard sidewall 52 separated therefrom by a chamber or compartment 54 of the grease can that receives the grease and debris. The chamber or compartment is further defined by first and second end walls 56, 57 and a base 58 of the grease can. The inboard sidewall 50 has an inner surface 60 (FIG. 2), and outer surface 62, and an upper edge 64. The outboard sidewall 52 has an inner surface 66, an outer surface 68, and an upper edge 70. At each of the end walls 56, 57 the grease can 42 has a pull tab 72. The exemplary grease can is made of stainless steel (e.g., cut, bent, and welded of sheetmetal).

With the grease can 42 installed, the upper edge 64 of its inboard sidewall 50 rests below a portion of the cooking surface 32 and platen 40 adjacent the associated edge 44 or 45. This allows grease, food, and the like to be scraped from the grill into the compartment 54. The exemplary outboard sidewall 52 protrudes above the inboard sidewall and above the cooking surface 32 to serve as a splatter guard for grease that may splatter during the cooking or when being scraped from the grill.

As so far described, the exemplary grill 20 is merely illustrative of one of several grill configurations to which its present teachings may be applied. A tool holder 80 may be removably mounted to the grill. The exemplary tool holder 80 mounts to the outboard sidewall 52 of the grease can 42. The tool holder has at least one tool-holding compartment 82 (FIG. 1) for holding tools 84, 86, and 88 including utensils (spatulas, tongs, forks, knives, chopping tools, and the like) and cleaning tools (scrapers and the like). The tool holder includes at least one drainage port 90 positioned to drain the at least one tool-holding compartment 82 into the grease can 42.

The exemplary tool holder straddles the upper edge 70 of the outboard sidewall of the grease can to mount the tool holder to the grease can 42.

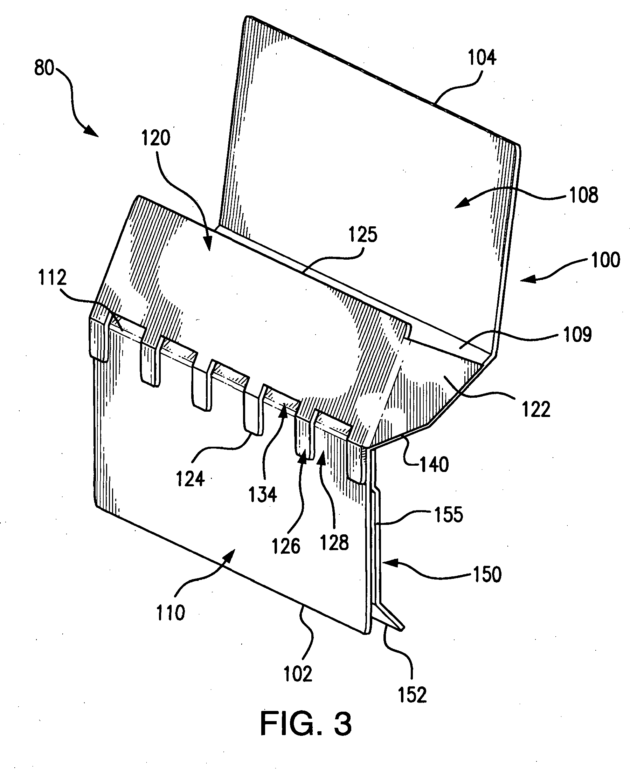

The exemplary tool holder is formed as a sheetmetal assembly. The exemplary sheetmetal assembly consists essentially of three pieces of metal (e.g., including any welds or other attachments between the pieces and also eventually including any ornamental trim, additional accessories (e.g., hooks and the like)). An exemplary first or main sheetmetal piece 100 (FIG. 3) extends from a lower edge 102 inboard and below the grease can outboard sidewall upper edge 70 to an upper edge 104 thereabove. The first piece 100 has an upper portion 108 which forms an outboard wall (back wall from the point of view of the compartment) 109 of the tool-holding compartment 82. The first piece has a lower portion 110 extending to the lower edge 102 from a bottom 112 of the tool-holding compartment. Thus, any grease flowing along the inboard surface 106 of the first piece will exit from the tool-holding compartment and be guided by the lower portion 110 into the grease can as discussed below. The exemplary upper edge 104 of the first piece is also shifted outboard of the upper edge 70 of the grease can outboard sidewall to provide volume for the compartment 82.

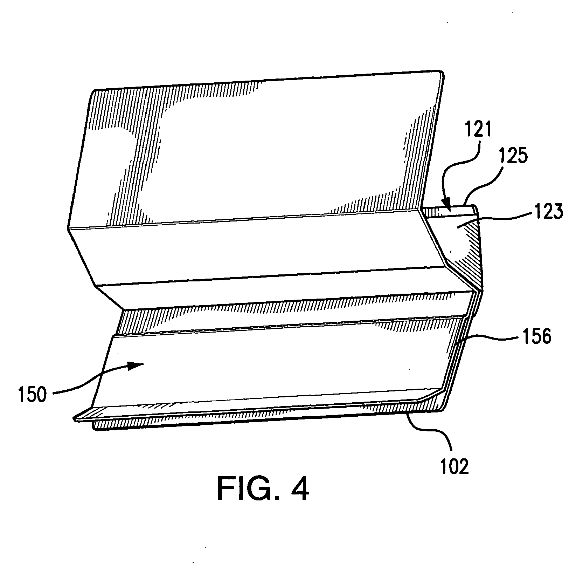

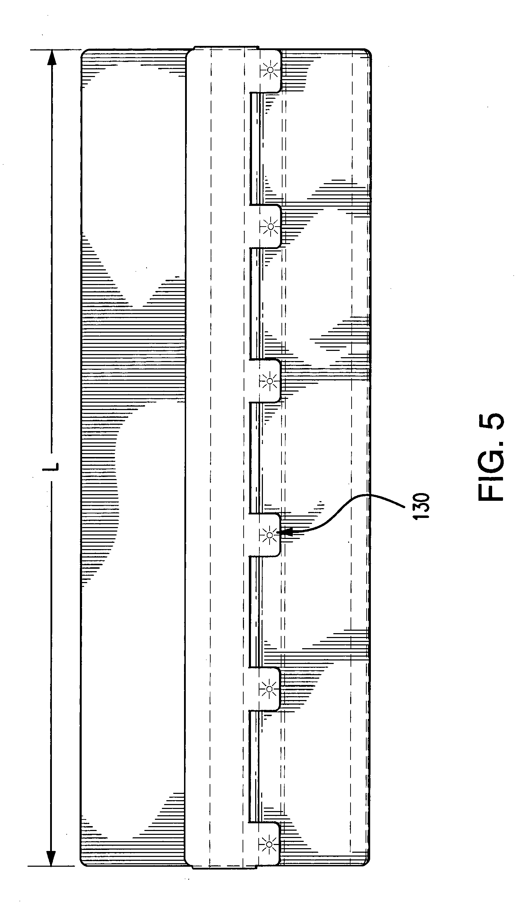

The second piece 120 forms an inboard wall 121 (FIG. 4) of the tool-holding compartment 82. The exemplary second piece 120 also forms end walls 122, 123 of the tool-holding compartment 82. The second piece 120 extends from a lower edge 124 to an upper edge 125. The upper edge forms an inboard upper edge of the compartment 82. The lower edge 124 is defined by a plurality of fingers 126 with recesses 128 therebetween. The fingers are mounted to the first piece (e.g., along the fingers, the outboard surface 128 (FIG. 2) of the second piece is tack welded to the inboard surface 106 of the first piece via tack welds 130 (FIG. 5). The recesses 128 (FIG. 3) (or upper portions thereof) define drainage ports 134 (e.g., one or both of the first and second pieces are bent away from each other to define the compartment and expose the ports).

At front and rear ends of a main portion of the second piece, ears of the second piece wrap around to join the first piece to define the end walls 122, 123 of the tool-holding compartment and are secured to the first piece (e.g., via seam welds 140 along the respective front and rear edges of the first piece).

The third piece 150 cooperates with the lower portion of the first piece to mount the tool holder to the grease can. In the exemplary embodiment, the lower portion of the first piece is essentially flat and vertical. The exemplary third piece 150 extends from an upper edge 151 to a lower edge 152 and has a generally inboard surface 153 and a generally outboard surface 154. The third piece has a pair of generally opposite ends 155, 156. Along an upper portion 160 (FIG. 2), the inboard surface 153 contacts the outboard surface of the first piece lower portion. Along this portion 160, the first and third pieces are secured to each other. For example, they may be secured by the same tack welds that secure the first and second pieces or by other such welds.

At a lower end of the upper portion 160, a double bend 162 allows an intermediate portion 164 of the third piece to be spaced slightly apart from the first piece lower portion 110 to define a channel 166 for receiving the upper edge portion of the outboard sidewall of the associated grease can. At a lower end of the intermediate portion 164, a bend 168 may separate the intermediate portion from a lower edge portion 170 which forms a guide allowing ease of installation of the tool holder to the grease can. The material of one or both of the first and third pieces may have sufficient elasticity to be slightly strained in the installed condition so as to grasp the grease can sidewall. The exemplary material for each of the three pieces is stainless steel (e.g., a single grade of stainless steel such as a 300-Series stainless steel (e.g., a sixteen gauge 304-stainless steel)). In an exemplary manufacturing process, the exemplary stainless steel pieces are cut, bent, welded to each other, and then polished (e.g., via a shaking in stone).

In use, the grease can 42 may be installed in position. Thereafter, the tool holder may be installed over the upper edge 70 of the outboard sidewall 52. As noted above, this installation may involve a slight flexing of portions of the tool holder so as to securely grasp the grease tray outboard sidewall 52. Tools may be placed into the tool-holding compartment 82 and repeatedly removed therefrom for use and thereafter returned. When the tools pick up grease, debris, or the like, once placed in the tool-receiving compartment, the grease, debris, or the like, may drain downward through the drainage ports and into the grease can. When the grease can is full or at another cleaning interval, the tool holder may be extracted from the grease can (e.g., via lifting up either with the tools or after the tools have been removed). The grease can may then be removed, emptied, and returned. At that time or separately, the tool holder may be cleaned. For example, the tool holder may be cleaned in a conventional food service sink or dishwasher.

Dimensionally, an exemplary overall length L (FIG. 5) is 0.3-0.6m, more narrowly, 0.45-0.55m. The compartment length is essentially the same (e.g., subject to the slight subtraction of material thickness). In the installed condition, the upper portion of the second piece 120 along the tool-holding compartment is inclined backward (outboard/in the direction of the compartment) by an angle θ₁. θ₁ may be effective to incline the tools outboard so as to not protrude over the cooking surface and not have a risk of falling onto the cooking surface or into the grease can. Exemplary θ₁ is 15-30°, more narrowly, 18-24°, or nominally 21°.

The exemplary first piece upper portion is divided by bends into three subportions 200, 202, and 204 (FIG. 2). The uppermost subportion 204 of the first piece (upper portion of compartment outboard/back wall) is also inclined outboard at an angle θ₂. Exemplary θ₂ is 4-15°, more narrowly, 5-10°, or nominally 7°. This angle also cooperates with the angle and positioning of the front wall (discussed below) to also help retain the tools from falling either inboard or outboard. The lower subportion 200 of the compartment outboard/back wall is at an angle θ₃ above horizontal. Exemplary θ₃ is 15-30°, more narrowly, 18-24°, or nominally 21°. This is chosen to be sufficiently off-vertical to facilitate grease/debris drainage. The exemplary portion 202 is more vertical (e.g., at an angle θ₄ off-horizontal of 35-60°, more narrowly, 40-50°, or a nominal 46°. This helps guide tips of the tools toward the portion 200 and base of the compartment when tools are inserted.

FIG. 2 also shows an exemplary compartment depth D₁ at the inboard/front wall upper edge 125 and depth D₂ of the back wall upper edge 104 relative to the inboard/front wall upper edge. Exemplary compartment heights at the edges 125 and 104 are shown as H₁ and H₂, respectively. Exemplary H₁ is selected to help retain the tools (e.g., against falling inboard) while exemplary H₂ is chosen to help retain the tools against falling outboard while not being so great as to interfere with tool handles (allowing the handles to be above the upper edge 104 so that the handles don't tilt the tools inward and so that the user has handle access without touching the holder). Exemplary D₁ is about 20-40mm, more narrowly, 25-30mm. Exemplary D₂ is 30-45mm, more narrowly, 32-38mm, or a nominal 35mm.

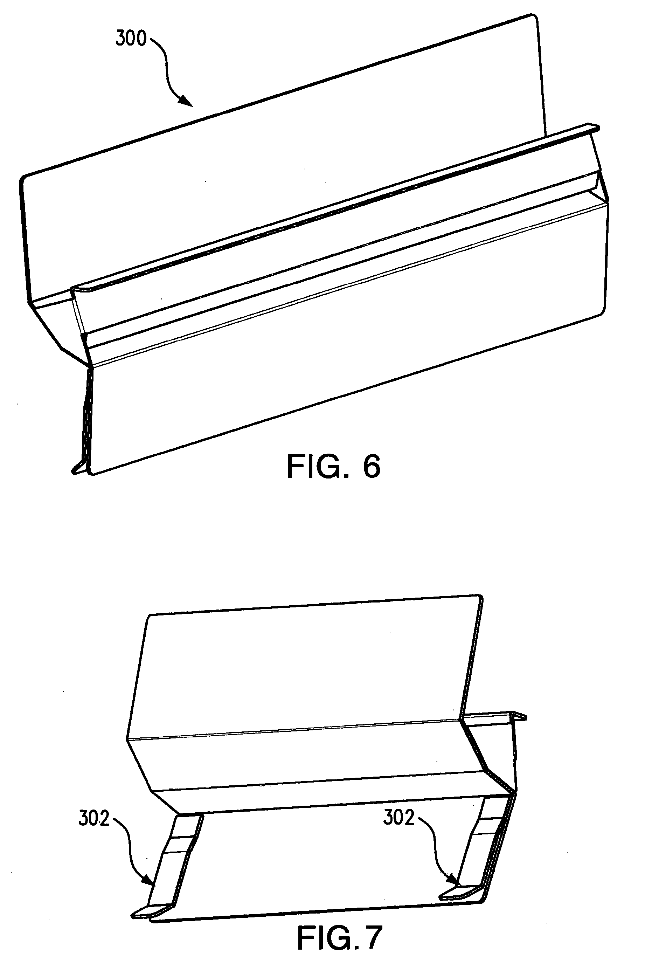

FIGS. 6 and 7 show an otherwise similar tool holder 300 having a single drain slot and wherein the single piece 150 is replaced by two pieces 302 respectively near the ends of the holder.

The tool holder may be used with other configurations of the grill. For example, some grills may have a permanent grease collection channel. Such a channel may, for example, have an angled bottom leading to a drain port which, in turn, discharges grease into a removable grease collection tray/can. In such a situation, the upper edge of the channel sidewall may represent an upper edge of an associated wall of the grill body. In such a situation, the collection tray/can may thus be moved and cleaned independently of the tool holder.

Although an embodiment is described above in detail, such description is not intended for limiting the scope of the present disclosure. It will be understood that various modifications may be made without departing from the scope of the disclosure. For example, when implemented as an accessory for an existing grill, details of the configuration of the existing grill may influence details of any particular implementation. Accordingly, other embodiments are within the scope of the following claims.

## Claims

1. A grill (20) comprising:
at least one grilling surface (32);
a grease collection channel (42) along at least one side of the grilling surface and having a sidewall (52) with an upper edge (70); and
a tool holder (80;300) mounted to the sidewall and having at least one tool-holding compartment (82); **characterised in that**:
the at least one tool-holding compartment (82) has an outboard wall extending above and outboard of the sidewall upper edge; and **in that** said tool holder (80; 300) has at least one drainage port (134) positioned to drain the at least one tool-holding compartment into the grease collection channel (42).

2. The grill (20) of claim 1 further comprising:
at least one said tool (84, 86, 88) carried by the tool holder (80; 300) with a portion of the tool in the tool-holding compartment (82).

3. The grill (20) of claim 1 or 2, wherein:
the grease collection channel (42) is formed by a removable grease collection tray.

4. The grill (20) of claim 1, 2 or 3, wherein:
the tool holder (80; 300) straddles the upper edge of the sidewall (52).

5. The grill (20) of claim 1, 2, 3 or 4, wherein the tool holder (80; 300) comprises:
a sheetmetal assembly.

6. The grill (20) of claim 5 wherein the sheetmetal assembly consists essentially of:
a first sheetmetal piece (100);
a second sheetmetal piece (120) secured to the first sheet metal piece (100);
and
a third sheetmetal piece (150) secured to the first sheet metal piece (100).

7. The grill (20) of claim 6, wherein:
the first sheet metal piece (100) forms said outboard wall of the at least one tool-holding compartment (82) and extends from below and inboard of the sidewall upper edge to above and outboard of the sidewall upper edge.

8. The grill (20) of claim 6 or 7, wherein:
the second sheetmetal piece (120) forms an inboard wall of the tool-holding compartment (82); and
the at least one drainage port (134) is formed between the first sheetmetal piece (100) and the second piece (120).

9. The grill of claim 6, 7 or 8, wherein:
the second sheetmetal piece (120) comprises a plurality of fingers (126) extending along a surface of the first sheetmetal piece (100), inboard of the sidewall; and
the third sheetmetal piece (150) extends downward outboard of the sidewall to define a wall-receiving channel (166) between the first sheetmetal piece (100) and the third sheetmetal piece (150).

10. A method for using the grill (20) of claim 1, the method comprising:
grilling food on the at least one grilling surface (32);
using a tool (84; 86; 88) in association with the grilling surface (32); and
placing the tool (84; 86; 88) in the at least one tool-holding compartment (82) so that grease from the tool (84; 86; 88) drains through the at least one drainage port (134) into the grease collection channel (142).

## Patentansprüche

1. Grill (20), umfassend:
wenigstens eine Grillfläche (32);
einen Fettsammelkanal (42) entlang wenigstens einer Seite der Grillfläche, der eine Seitenwand (52) mit einer oberen Kante (70) aufweist; und
einen Werkzeughalter (80; 300), der an der Seitenwand angebracht ist und wenigstens ein Werkzeugaufnahmefach (82) aufweist; **dadurch gekennzeichnet, dass**:
das wenigstens eine Werkzeugaufnahmefach (82) eine Außenwand aufweist, die sich über und außerhalb der oberen Kante der Seitenwand erstreckt; und der Werkzeughalter (80; 300) wenigstens eine Abflussöffnung (134) aufweist, die derart angeordnet ist, dass das wenigstens eine Werkzeugaufnahmefach in den Fettsammelkanal (42) entleert wird.

2. Grill (20) nach Anspruch 1, ferner umfassend:
wenigstens ein Werkzeug (84, 86, 88), das von dem Werkzeughalter (80; 300) getragen wird, wobei ein Abschnitt des Werkzeugs im Werkzeugaufnahmefach (82) ist.

3. Grill (20) nach Anspruch 1 oder 2, wobei:
der Fettsammelkanal (42) durch eine entfernbare Fettsammelwanne gebildet ist.

4. Grill (20) nach Anspruch 1, 2 oder 3, wobei:
der Werkzeughalter (80; 300) die obere Kante der Seitenwand (52) überspannt.

5. Grill (20) nach Anspruch 1, 2, 3 oder 4, wobei der Werkzeughalter (80; 300) Folgendes umfasst:
eine Blechbaugruppe.

6. Grill (20) nach Anspruch 5, wobei die Blechbaugruppe im Wesentlichen aus Folgendem besteht:
einem ersten Blechteil (100);
einem zweiten Blechteil (120), das am ersten Blechteil (100) gesichert ist;
ein drittes Blechteil (150), das an dem ersten Blechteil (100) gesichert ist.

7. Grill (20) nach Anspruch 6, wobei:
das erste Blechteil (100) die Außenwand des wenigstens einen Werkzeugaufnahmefachs (82) bildet und sich von unterhalb und innerhalb der oberen Kante der Seitenwand nach oberhalb und außerhalb der oberen Kante der Seitenwand erstreckt.

8. Grill (20) nach Anspruch 6 oder 7, wobei:
das zweite Blechteil (120) eine Innenwand des Werkzeugaufnahmefachs (82) bildet; und
die wenigstens eine Ablauföffnung (134) zwischen dem ersten Blechteil (100) und dem zweiten Teil (120) gebildet ist.

9. Grill nach Anspruch 6, 7 oder 8, wobei:
das zweite Blechteil (120) eine Mehrzahl von Fingern (126) umfasst, die sich entlang einer Fläche des ersten Blechteils (100) innerhalb der Seitenwand erstrecken; und
das dritte Blechteil (150) sich außerhalb der Seitenwand nach unten erstreckt, um einen Wandaufnahmekanal (166) zwischen dem ersten Blechteil (100) und dem dritten Blechteil (150) zu definieren.

10. Verfahren zum Verwenden des Grills (20) nach Anspruch 1, wobei das Verfahren Folgendes umfasst:
Grillen von Lebensmitteln auf der wenigstens einen Grillfläche (32);
Verwenden eines Werkzeugs (84; 86; 88) in Zusammenhang mit der Grillfläche (32); und
Ablegen des Werkzeugs (84; 86; 88) in dem wenigstens einen Werkzeugaufnahmefach (82), derart, dass Fett von dem Werkzeug (84; 86; 88) durch die wenigstens eine Ablauföffnung (134) in den Fettsammelkanal (142) abgelassen wird.

## Revendications

1. Gril (20) comprenant :
au moins une surface de cuisson (32) ;
un canal de collecte de graisse (42) le long d'au moins un côté de la surface de gril et comportant une paroi latérale (52) dotée d'un bord supérieur (70) ; et
un support d'outil (80 ; 300) monté à la paroi latérale et comportant au moins un compartiment de support d'outil (82) ; **caractérisé en ce que** :
l'au moins un compartiment de support d'outil (82) comporte une paroi externe s'étendant au-dessus et en dehors du bord supérieur de paroi latérale ; et **en ce que** ledit support d'outil (80 ; 300) comporte au moins un orifice de drainage (134) positionné pour drainer l'au moins un compartiment de support d'outil dans le canal de collecte de graisse (42).

2. Gril (20) selon la revendication 1, comprenant en outre :
au moins un desdits outils (84, 86, 88) porté par le support d'outil (80 ; 300) avec une partie de l'outil dans le compartiment de maintien d'outil (82).

3. Gril (20) selon la revendication 1 ou 2, dans lequel :
le canal de collecte de graisse (42) est formé d'un plateau amovible de collecte de graisse.

4. Gril (20) selon la revendication 1, 2 ou 3, dans lequel :
le support d'outil (80 ; 300) enjambe le bord supérieur de la paroi latérale (52).

5. Gril (20) selon la revendication 1, 2, 3 ou 4, dans lequel le support d'outil (80 ; 300) comprend :
un ensemble formant une tôle métallique.

6. Gril (20) selon la revendication 5, dans lequel l'ensemble formant une tôle métallique est surtout constitué de :
une première pièce de tôle métallique (100) ;
une deuxième pièce de tôle métallique (120) fixée à la première pièce de tôle métallique (100) ;
et
une troisième pièce de tôle métallique (150) fixée à la première pièce de tôle métallique (100).

7. Gril (20) selon la revendication 6, dans lequel :
la première pièce de tôle métallique (100) forme ladite paroi externe de l'au moins un compartiment de maintien d'outil (82) en s'étendant au-dessous et à l'intérieur du bord supérieur de paroi latérale vers le dessus et l'extérieur du bord supérieur de paroi latérale.

8. Gril (20) selon la revendication 6 ou 7, dans lequel :
la deuxième pièce de tôle métallique (120) forme une paroi interne du compartiment de support d'outil (82) ; et
l'au moins un orifice de drainage (134) est formé entre la première pièce de tôle métallique (100) et la deuxième pièce (120).

9. Gril selon la revendication 6, 7 ou 8, dans lequel :
la deuxième pièce de tôle métallique (120) comprend une pluralité de doigts (126) s'étendant le long d'une surface de la première pièce de tôle métallique (100), à l'intérieur de la paroi latérale ; et
la troisième pièce de tôle métallique (150) s'étend vers le bas en dehors de la paroi latérale pour définir un canal de réception de paroi (166) entre la première pièce de tôle métallique (100) et la troisième pièce de tôle métallique (150).

10. Procédé d'utilisation du gril (20) selon la revendication 1, ce procédé comprenant :
de faire griller de la nourriture sur l'au moins une surface de cuisson (32) ;
l'utilisation d'un outil (84, 86, 88) en association avec la surface de cuisson (32) ;
et
le placement de l'outil (84, 86, 88) dans au moins un compartiment de support d'outil (82), pour que la graisse extraite de l'outil (84, 86, 88) soit drainée à travers l'au moins un orifice de drainage (134) dans le canal de collecte de graisse (142).
